# EUROPÄISCHE PATENTSCHRIFT

(11) **EP 0 576 429 B1**
(45) Veröffentlichungstag und Bekanntmachung des Hinweises auf die Patenterteilung: **12.04.1995**
(21) Anmeldenummer: 92901297.9
(22) Anmeldetag: 27.12.1991
(51) Int. Cl.: G01B 3/06

(54) **GLIEDERMASSSTAB AUS HOLZ**
WOODEN FOLDING RULER
METRE PLIANT EN BOIS

(30) Priorität: 22.03.1991 DE 4109412; 27.05.1991 WO PCT/EP91/00971
(43) Veröffentlichungstag der Anmeldung: 05.01.1994
(73) Patentinhaber: ADGA Adolf Gampper GmbH, D-74535 Mainhardt (DE)
(72) Erfinder: GAMPPER, Gerald, D-7173 Mainhardt (DE)
(74) Vertreter: Wolf, Eckhard, Dr.-Ing.
(86) Internationale Anmeldenummer: EP9102509
(87) Internationale Veröffentlichungsnummer: WO9216816

(56) Entgegenhaltungen:
- CH-A- 494 390
- US-A- 1 331 951
- US-A- 1 538 995

## Beschreibung

Die Erfindung betrifft einen Gliedermaßstab mit langgestreckten flachen Holzgliedern, mit in einem mindestens der Gliedbreite entsprechenden Längsabstand von den stirnseitigen Gliedkanten durch in Querrichtung mittig angeordnete, miteinander fluchtende Gelenkbohrungen hindurchgreifenden und dabei die Holzglieder unter Gegeneinanderdrücken ihrer einander zugewandten Breitseitenflächen paarweise gelenkig miteinander verbindenden Nietbolzen und mit je einem die Holzglieder in ihren Parallellagen paarweise miteinander verrastenden Rastmechanismus, der zwei auf beiden Seiten in gleichem Abstand vom Nietbolzen angeordnete Rastvertiefungen im Bereich des einen Gliedendes und mindestens eine in diese unter elastischer Vorspannung einrastbare komplementäre Rasterhebung im Bereich des andere Gliedendes aufweist.

Bei bekannten Gliedermaßstäben dieser Art sind die Rastvertiefungen und Rasterhebungen des Rastmechanismus in metallischen Federbeschlägen angeordnet, die im Bereich der Gelenkverbindungen mittels abgebogener Zackenränder (CH-A-494390) oder umgebördelter Kantenumfassungsränder (US-A-1538995) an den Holzgliedern befestigt sind. Die Rastkräfte werden dort entweder durch federnd an den Beschlägen angeformte Rastzungen, durch in Ringaussparungen im Bereich der Gelenkbohrungen eingesetzte Tellerfedern oder durch Biegebeanspruchung der Federplatten und des Maßstabsholzes mit in Längsrichtung der Holzglieder verlaufender Biegeachse erzeugt. Zur Unterbringung der Federbeschläge sind Vertiefungen in den einander zugewandten Breitseitenflächen und/oder Längskantenhinterschneidungen notwendig, die eine unerwünschte Schwächung des Maßstabsholzes im Gelenkbereich hervorrufen. Hinzu kommt, daß die Federbeschläge neben dem unvermeidlichen Materialaufwand einen hohen Fertigungsaufwand sowohl bei ihrer Herstellung als auch bei ihrer Anbringung an den Maßstabsgliedern erfordern. Dies gilt umso mehr, als die einzuhaltende Eichgenauigkeit nur geringe Fertigungstoleranzen zuläßt. Die Metallbeschläge wirken sich dazuhin nachteilig auf das Gesamtgewicht des Gliedermaßstabs und damit auf die an sich unerwüschte Durchbiegung des geöffneten Maßstabs aus.

Ausgehend hiervon liegt der Erfindung die Aufgabe zugrunde, einen Gliedermaßstab der eingangs angegebenen Art zu entwickeln, der trotz geringstmöglichem Materialund Fertigungsaufwand eine hohe Stabilität im Gelenkbereich und eine funktionsgerechte Verrastung in den Parallellagen der Holzglieder gewährleistet.

Zur Lösung dieser Aufgabe wird die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Die Erfindung geht von dem Gedanken aus, daß die Holzglieder als solche bei geeigneter elastischer Biegebeanspruchung eine für die Verrastung in den Parallellagen ausreichende Rastkraft erzeugen, ohne daß es dabei zu unerwüschten Verschleißerscheinungen im Gelenk- und Rastbereich kommt. Um dies zu erreichen, wird gemäß der Erfindung folgende Merkmalskombination vorgeschlagen:
- Die Rastvertiefungen sind in einem mindestens der halben Gliedbreite entsprechenden Längsabstand von den Gelenkbohrungen vorzugsweise in Querrichtung mittig in die Breitseitenflächen des einen Holzglieds unmittelbar eingeformt;
- die Rasterhebung ist durch mindestens einen im Abstand der Rastvertiefungen von der Gelenkbohrung im anderen Holzglied starr angeordneten, mit einer balligen glatten Rastfläche über dessen Breitseitenfläche überstehenden Rastkörper aus einem härteren Werkstoff als Holz gebildet;
- die über den Nietbolzen in Längsrichtung überstehenden Gliedteile sind beim Verschwenken der Holzglieder durch Einwirkung des auf der Breitseitenfläche des gegenüberliegenden Holzglieds auflaufenden Rastkörpers unter Bildung der Rastkräfte mit im wesentlichen querverlaufender Biegeachse elastisch verbiegbar;
- der Rastkörper ist im Preßsitz in einer in der Breitseitenfläche des betreffenden Holzglieds befindlichen Aussparung angeordnet und als vorgefertigter Massivkörper oder als vorgefertigter, vorzugsweise zur Breitseitenfläche hin offener Hohlkörper ausgebildet.

Gemäß einer bevorzugten Ausgestaltung der Erfindung ist eine in der Breitseitenfläche zwischen Rastvertiefung und Längsseitenrändern des einen Holzglieds verlaufende teilkreisförmige Laufspur für den Rastkörper des anderen Holzglieds vorgesehen. Die Laufspur wird dabei vorteilhafterweise beim Verschwenken der Holzglieder durch Einwirkung des unter elastischer Vorspannung der überstehenden Gliedteile gegen die Breitseitenfläche andrückenden Rastkörpers gebildet, wobei im Holz im Bereich der Laufspur durch den beim Verschwenken andrückenden Rastkörper eine Materialverdichtung und Formstabilisierung erfolgt.

Gemäß einer weiteren vorteilhaften Ausgestaltung der Erfindung sind die Rastvertiefungen und der Rastkörper sowie vorteilhafterweise auch die Laufspuren bei um 90° gegeneinander verschwenkten Holzgliedern vollständig außerhalb des gegenseitigen Überdeckungsbereichs der Holzglieder angeordnet. Wenn bei in einem Schwenkbereich zwischen 60° und 120° oder noch besser zwischen 50° und 130° die Rastkörper außerhalb des gegenseitigen Überdeckungsbereichs der Holzglieder angeordnet sind, wird der Nietbolzen über den betreffenden Schwenkbereich der Maßstabsglieder vollständig entlastet. Die im Bereich der Nietbolzen eng anliegenden Glieder bilden in den Nietbohrungen eine ideale Nietführung bei geringster axialer und radialer Nietbelastung, so daß eine geringe Verschleißanfälligkeit und damit eine hohe Eichgenauigkeit auch bei häufigem Gebrauch des Gliedermaßstabs gewährleistet ist. Dies gilt umso mehr, als auch im Bereich der Rastvertiefung und der Laufspur nur eine geringe Verschleißanfälligkeit besteht, was vor allem darauf zurückzuführen ist, daß die Rastvertiefung gemäß einer bevorzugten Ausgestaltung der Erfindung durch zwei paarweise einander gegenüberliegende Randbereiche begrenzt ist, von denen das eine Randbereichspaar in die benachbarten Laufspuren mündende Auflaufflächen und das andere, eine höhere Oberkante aufweisende Randbereichspaar einen Formsitz für den Rastkörper bildet.

Eine bevorzugte Ausgestaltung der Erfindung sieht vor, daß die Rastvertiefungen und der Rastkörper einen kreisförmigen Umriß aufweisen, wobei der Rastkörper die Gestalt einer Kugelkalotte und die Rastvertiefungen eine hohlkugelförmige Gestalt aufweisen können. Die Rastkörper können im Preßsitz in einer in der Breitseitenfläche des betreffenden Holzglieds befindlichen Aussparung angeordnet werden. Erforderlichenfalls kann zusätzlich zum Preßsitz ein Formschluß erzeugt werden, indem die Aussparungskante in Richtung Rastkörper angedrückt oder angestaucht wird. Um auch im eingerasteten Zustand eine Vorspannung zwischen den benachbarten Holzgliedern zu erzeugen, steht der Rastkörper erfindungsgemäß mit gegenüber der Rastvertiefung geringem Übermaß von vorzugsweise 0,1 bis 0,2 mm über die betreffende Breitseitenfläche über.

Die Rastkörper werden vorzugsweise als vorgefertigte Massivkörper oder als zur Breitseite des betreffenden Holzglieds hin offene Hohlkörper ausgebildet, die aus einem Material der Gruppe Glas, Keramik, Kunststoff oder Metall bestehen können.

Gemäß einer weiteren vorteilhaften Ausgestaltung der Erfindung wird der Rastkörper als Stanz- und/oder Tiefziehteil aus Metallblech hergestellt, das eine Wandstärke von 0,1 bis 0.3 mm aufweist. Die Stanz- und/oder Tiefziehteile können im Zuge des Zusammenbaus der Maßstabsglieder mitlaufend aus Bandmaterial geformt und montiert werden.

Vor allem bei kleinen Gliedermaßstäben weist jedes Holzglied nur einen auf der dem Gliedende zugewandten Seite der zugehörigen Gelenkbohrung angeordneten Rastkörper auf, während insbesondere bei größeren Gliedermaßstäben auch zwei in gleichem Abstand von der zugehörigen Gelenkbohrung spiegelbildlich zueinander angeordnete Rastkörper vorgesehen werden können.

Eine weitere vorteilhafte Ausgestaltung der Erfindung sieht vor, daß die Holzglieder auch im Bereich der Rastvertiefung und der Laufspuren mit einem glatten Lacküberzug versehen werden. Diese Maßnahme verbessert die gegenseitige Verschwenkbarkeit der Holzglieder und die Rastfähigkeit in den Parallellagen und trägt zusätzlich dazu bei, daß auch bei häufigem Gebrauch kein Verschleiß eintreten kann.

Die Erfindung weist zusätzlich noch folgende Vorteile auf:
- Die Maßstabsglieder liegen in zusammengeklapptem Zustand dicht gegeneinander an und bilden an ihren Kanten eine zusammenhängende Fläche, die beispielsweise mit einem bis zu den Maßstabsenden reichenden Werbeaufdruck versehen werden kann.
- Da im Bereich der Nietgelenke und der Rastelemente keine Holzschwächung vorhanden ist, können ohne Bruchgefahr Holzglieder mit sehr viel dünnerer Wandstärke als bisher verwendet werden, so daß man einen relativ leichten Gliedermaßstab erhält, der zusammengeklappt sehr schlank ist und auseinandergeklappt zu einer relativ geringen Durchbiegung neigt.

Im folgenden wird die Erfindung anhand der in der Zeichnung in schematischer Weise dargestellten Ausführungsbeispiele näher erläutert. Es zeigen:
- Fig. 1: eine Seitenansicht eines Holzgliedermaßstabs mit ausgeschwenktem oberem Maßstabsglied;
- Fig. 2: eine Draufsicht auf den Gliedermaßstab nach Fig. 1;
- Fig. 3a: eine Draufsicht auf ein Maßstabsglied mit einem Rastkörper;
- Fig. 3b: eine Draufsicht auf ein Maßstabsglied mit zwei Rastvertiefungen;
- Fig. 3c: einen Schnitt durch die beiden einander gegenüberliegenden Maßstabsglieder gemäß Fig. 3a und 3b in Explosionsdarstellung;
- Fig. 4a: eine Draufsicht auf ein Maßstabsglied mit zwei Rastkörpern;
- Fig. 4b: eine Draufsicht auf ein Maßstabsglied mit zu den Rastkörpern nach Fig. 4a komplementären Rastvertiefungen;
- Fig. 4c: einen Schnitt durch die einander zugewandten Maßstabsglieder nach Fig. 4a und 4b in Explosionsdarstellung,;
- Fig. 5a: einen Schnitt durch zwei benachbarte Maßstabsglieder in Parallellage;
- Fig. 5b: einen Schnitt durch die Maßstabsglieder nach Fig. 5a in gegeneinander leicht verschwenktem Zustand;
- Fig. 6a: eine Draufsicht auf das Gliedende im Bereich einer Rastaussparung;
- Fig. 6b: einen Schnitt entlang der gekrümmten Schnittlinie 6 - 6 der Fig. 6a.

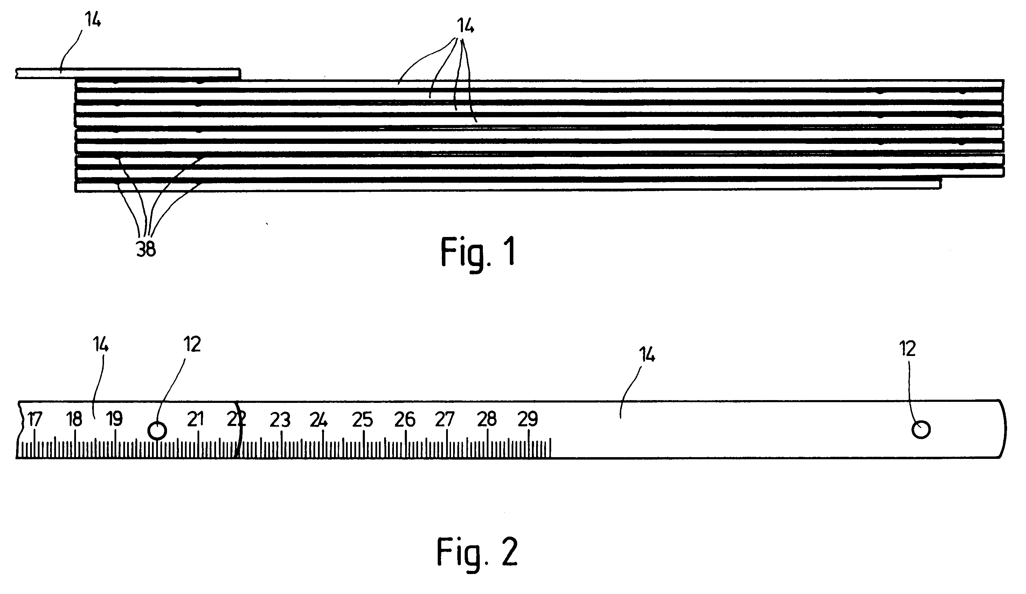

Die in der Zeichnung dargestellten Gliedermaßstäbe bestehen aus einer größeren Anzahl, beispielsweise zehn in der Nähe ihrer Gliedenden 10, 10′ im Abstand von den stirnseitigen Gliedkanten 11 mittels Nietbolzen 12 paarweise gelenkig miteinander verbundenen Holzgliedern 14. Die Nietbolzen 12 greifen durch miteinander fluchtende Gelenkbohrungen 16 in den Holzgliedern 14 hindurch und stützen sich mit ihren Köpfen 18, 20 unter Zwischenklemmen einer aus einem gleitfähigen Kunststoff bestehenden Unterlagscheibe 22 in Vertiefungen 24 der Holzglieder 14 ab und drücken die Holzglieder 14 an ihren einander zugewandten Breitseitenflächen 26 so gegeneinander, daß sie noch unter Reibung gegeneinander verschwenkbar sind. Ein im Bereich der miteinander verbundenen Gliedenden angeordneter Rastmechanismus sorgt dafür, daß die Maßstabsglieder 14 in ihren Parallellagen (Fig. 1, 2, 5a) miteinander verrastbar sind.

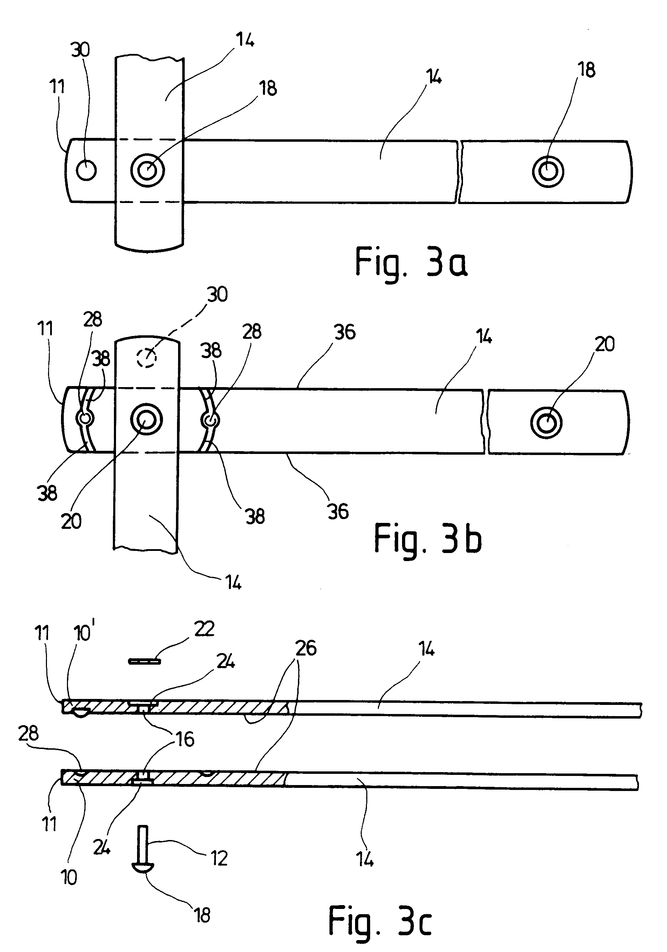

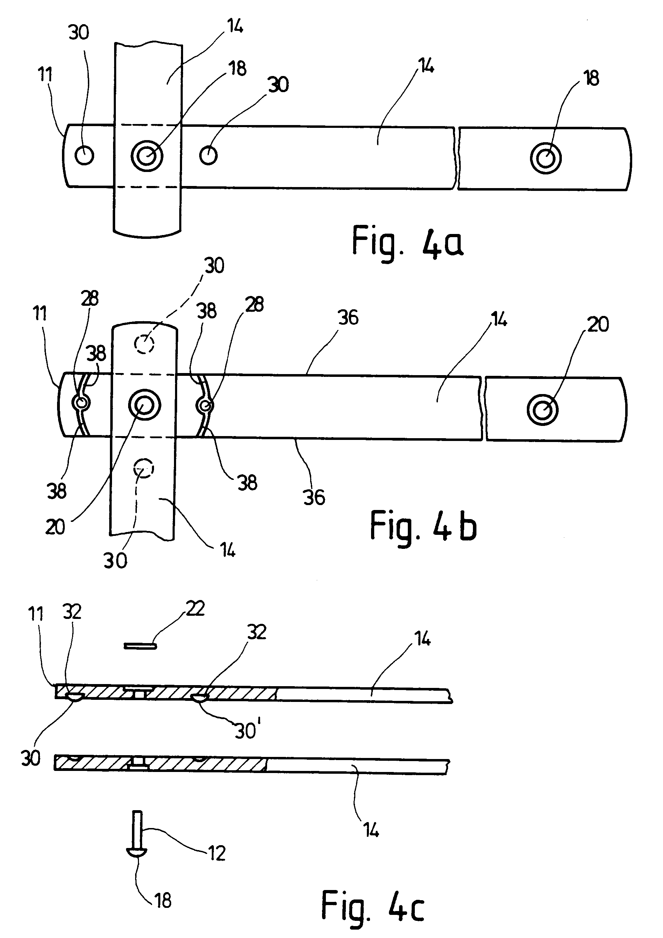

Der Rastmechanismus besteht im wesentlichen aus zwei Rastvertiefungen 28 im Holz des einen Gliedendes 10 und einem Rastkörper 30 (Fig. 3a bis 3c) bzw. zwei Rastkörpern 30, 30′ (Fig. 4a bis 4c) im anderen Gliedende 10′. Die an ihrer Oberfläche balligen Rastkörper 30, 30′ sind im Preßsitz in eine entsprechende Aussparung 32 in der Breitseitenfläche 26 des Gliedendes 10′ eingesetzt. Zur Vermeidung eines vorzeitigen Verschleißes bestehen die Rastkörper 30, 30′ aus einem härteren Werkstoff als das Maßstabsholz, beispielsweise aus Glas, Keramik, hartem Kunststoff, Hartholz oder Metall. Sie können als vorgefertigte Massivkörper oder Hohlköper oder als im Zuge des Fertigungsvorgangs hergestellte Stanz- und Tiefziehteile ausgebildet sein. Beim Verschwenken der Maßstabsglieder 14 wird durch den Rastkörper 30 in das Gliedende 10 allmählich unter Materialverdichtung eine sich zwischen den Rastvertiefungen 28 und den Längsseitenkanten 36 des Gliedendes 10 erstreckende teilkreisförmige Laufspur 38 eingeprägt, die eine zusätzliche Führung beim Schwenkvorgang gewährleistet.

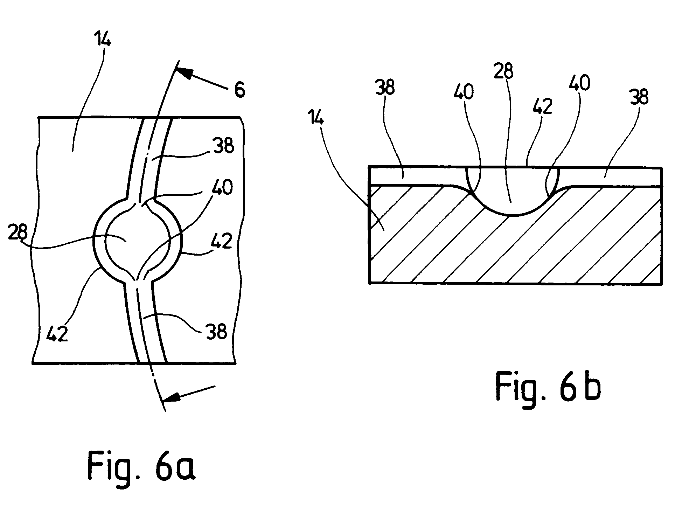

Aufgrund der mit der Einprägung zunehmenden Materialverdichtung ist die Tiefe der Laufspur 38 nach Maßgabe der auf sie einwirkenden Rastkräfte begrenzt. Bei ausreichend glatter Oberfläche der Rastkörper 30 tritt im Bereich der Laufspur 38 auch bei häufigem Maßstabsgebrauch kein Verschleiß auf. Wie aus den Fig. 6a und 6b zu ersehen ist, ist die Rastvertiefung 28 durch zwei paarweise einander gegenüberliegende Randbereiche 40 bzw. 42 begrenzt. Das Randbereichspaar 40 bildet dabei jeweils eine in die benachbarte Laufspur 38 mündende Auflauffläche für den Rastkörper, während das andere, eine höhere Oberkante aufweisende Randbereichspaar 42 einen kreisförmigen Formsitz für den Rastkörper 30 bildet.

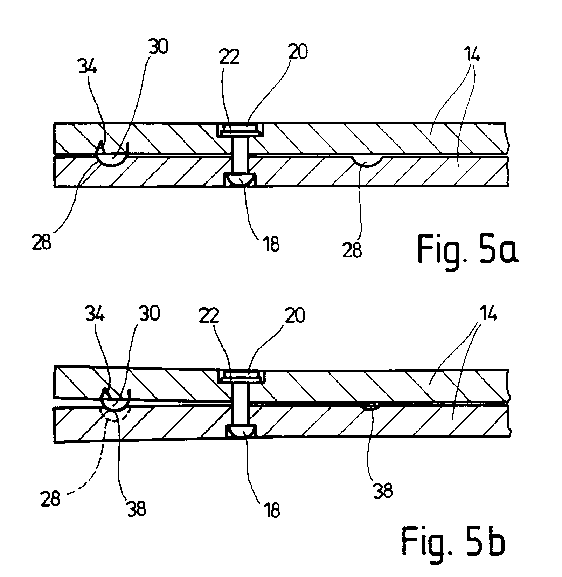

Wie insbesondere aus Fig. 5a zu ersehen ist, rastet der Rastkörper 30 in der Parallellage der benachbarten Maßstabsglieder 14 in die zugehörige Rastvertiefung 28 ein. Eine besonders stabile Rastlage wird bei im Umriß aufeinander abgestimmten kreisförmigen Rastkörpern und Rastvertiefungen erzielt. Grundsätzlich sind jedoch beliebige, aneinander angepaßte Umrißgestalten der Rastkörper und der Rastvertiefungen möglich. Beim Verschwenken der Maßstabsglieder 14 gelangt der Rastkörper 30 aus der Rastvertiefung 28 heraus in die Laufspur 38. Dabei werden die über die Gelenkverbindung 12 überstehenden Gliedenden 10, 10′ unter elastischer Biegebeanspruchung gegeneinander aufgespreizt (Fig. 5b). Dadurch ergibt sich eine spürbare Rastkraft, die beim Verschwenken aus den Parallellagen zu überwinden ist. Sobald der Rastkörper die Außenkante 36 überschreitet, geht die Spreizung und damit die elastische Biegebeanspruchung der Gliedenden wieder zurück, so daß sich die Maßstabsglieder in einem Zwischenbereich zwischen den beiden Parallelstellungen leicht gegeneinander verschwenken lassen. Ein spürbarer Rasteffekt tritt erst wieder ein, wenn der Rastkörper 30 beim Weiterdrehen über die Längskante 36 auf die gegenüberliegende Laufspur 38 aufläuft, um schließlich in die nächste Rastvertiefung 28 einzurasten. Durch entsprechende Dimensionierung der Rastvertiefung 28 und des überstehenden Teils des Rastkörpers 30 kann auch in den eingerasteten Stellungen eine durch geringes Aufspreizen der Gliedenden um etwa 0,1 bis 0,2 mm hervorgerufene kleine Vorspannung aufrechterhalten werden.

## Patentansprüche

1. Gliedermaßstab mit langgestreckten flachen Holzgliedern (14), mit in einem mindestens der Gliedbreite entsprechenden Längsabstand von den stirnseitigen Gliedkanten durch in Querrichtung mittig angeordnete, miteinander fluchtende Gelenkbohrungen (16) hindurchgreifenden und dabei die Holzglieder unter Gegeneinanderdrücken ihrer einander zugewandten Breitseitenflächen (26) paarweise gelenkig miteinander verbindenden Nietbolzen, und mit je einem die Holzglieder (14) in ihren Parallellagen paarweise miteinander verrastenden Rastmechanismus, der zwei auf beiden Seiten in gleichem Abstand vom Nietbolzen (12) angeordnete Rastvertiefungen (28) im Bereich des einen Gliedendes (10) und mindestens eine in diese unter elastischer Vorspannung einrastbare komplementäre Rasterhebung (30) im Bereich des anderen Gliedendes (10′) aufweist, **dadurch gekennzeichnet**, daß die Rastvertiefungen (28) in einem mindestens der halben Gliedbreite entsprechenden Längsabstand von den Gelenkbohrungen (16) innerhalb der Breitseitenfläche (26) des einen Holzglieds (10,14) unmittelbar in das Maßstabsholz eingeformt sind, daß die Rasterhebung durch mindestens einen im Abstand der Rastvertiefungen (28) von der Gelenkbohrung (16) innerhalb der Breitseitenfläche des anderen Holzglieds (10′,14) unmittelbar im Maßstabsholz verankerten, mit einer balligen glatten Rastfläche über dessen Breitseitenfläche (26) überstehenden Rastkörper (30) aus einem härteren Werkstoff als das Maßstabsholz gebildet ist, daß die über den Nietbolzen in Längsrichtung überstehenden Gliedteile beim Verschwenken der Holzglieder (14) durch Einwirkung des auf der Breitseitenfläche (26) des gegenüberliegenden Holzglieds (14) auflaufenden Rastkörpers elastisch verbiegbar sind, und daß der Rastkörper (30) im Preßsitz in einer in der Breitseitenfläche (26) des betreffenden Holzglieds (10′,14) befindlichen Aussparung angeordnet ist und als vorgefertigter Massivkörper oder als vorgefertigter, vorzugsweise zur Breitseitenfläche (26) hin offener Hohlkörper ausgebildet ist.

2. Gliedermaßstab nach Anspruch 1, **gekennzeichnet** **durch** je eine in der Breitseitenfläche (26) zwischen der Rastvertiefung (28) und den Längsseitenrändern (36) des einen Holzglieds (10,14) verlaufende teilkreisförmige Laufspur (38) für den Rastkörper (30) des anderen Holzglieds (10′,14).

3. Gliedermaßstab nach Anspruch 2, **dadurch gekenn****zeichnet**, daß die Laufspur (38) beim Verschwenken der Holzglieder (14) durch Einwirkung des unter elastischer Vorspannung der überstehenden Gliedteile gegen die Breitseitenfläche andrückenden Rastkörpers (30) gebildet ist.

4. Gliedermaßstab nach Anspruch 2 oder 3, **dadurch gekennzeichnet,** daß das Holz im Bereich der Laufspur (38) eine beim Verschwenken der Holzglieder (14) unter Einwirkung des unter elastischer Vorspannung der überstehenden Gliedteile andrückenden Rastkörpers (30) erzeugte Materialverdichtung aufweist.

5. Gliedermaßstab nach einem der Ansprüche 2 bis 4, **dadurch gekennzeichnet**, daß jede Rastvertiefung (28) durch zwei paarweise einander gegenüberliegende Randbereiche (40,42) begrenzt ist, von denen das eine Randbereichspaar (40) in die benachbarten Laufspuren (38) mündende Auflaufflächen und das andere, eine gegenüber dem ersten eine höhere Oberkante aufweisende Randbereichspaar (42) einen Formsitz für den Rastkörper (30) bildet.

6. Gliedermaßstab nach einem der Ansprüche 1 bis 5, **dadurch gekennzeichnet**, daß die Rastvertiefungen (28) und der Rastkörper (30) in Querrichtung mittig an der Breitseitenfläche (26) des zugehörigen Holzglieds (10,14) angeordnet sind.

7. Gliedermaßstab nach einem der Ansprüche 1 bis 6, **dadurch gekennzeichnet**, daß die Rastvertiefungen (28) und der Rastkörper (30) bei um 90° gegeneinander verschwenkten Holzgliedern (14) vollständig außerhalb des gegenseitigen Überdeckungsbereichs der Holzglieder angeordnet sind.

8. Gliedermaßstab nach einem der Ansprüche 1 bis 6, **dadurch gekennzeichnet**, daß die Rastvertiefungen (28) und der Rastkörper (30) bei um einen Winkel im Bereich innerhalb 60° bis 120°, vorzugsweise innerhalb 50° bis 130° gegeneinander verschwenkten Holzgliedern (14) vollständig außerhalb des gegenseitigen Überdeckungsbereichs der Holzglieder angeordnet sind.

9. Gliedermaßstab nach einem der Ansprüche 2 bis 8, **dadurch gekennzeichnet**, daß die Laufspuren (38) bei um 90° gegeneinander verschwenkten Holzgliedern (14) vollständig außerhalb des gegenseitigen Überdeckungsbereichs der Holzglieder (14) angeordnet sind.

10. Gliedermaßstab nach einem der Ansprüche 1 bis 9, **dadurch gekennzeichnet**, daß die Rastvertiefungen (28) und der Rastkörper (30) einen zueinander komplementären kreisförmigen Umriß aufweisen.

11. Gliedermaßstab nach einem der Ansprüche 1 bis 10, **dadurch gekennzeichnet**, daß der Rastkörper (30) die Gestalt einer Kugelkalotte aufweist.

12. Gliedermaßstab nach einem der Ansprüche 1 bis 11, **dadurch gekennzeichnet**, daß die Randkante der Aussparung unter Bildung eines Formschlusses für den Rastkörper gegen den Rastkörper angedrückt oder angestaucht ist.

13. Gliedermaßstab nach einem der Ansprüche 1 bis 12, **dadurch gekennzeichnet**, daß der Rastkörper (30) mit gegenüber der Rastvertiefung geringem Übermaß von vorzugsweise 0,1 bis 0,2 mm über die betreffende Breitseitenfläche (26) übersteht.

14. Gliedermaßstab nach einem der Ansprüche 1 bis 13, **dadurch gekennzeichnet**, daß der Rastkörper aus einem Material der Gruppe Glas, Keramik, Kunststoff, Hartholz oder Metall besteht.

15. Gliedermaßstab nach einem der Ansprüche 1 bis 14, **dadurch gekennzeichnet**, daß der Rastkörper als Stanz- und/oder Tiefziehteil aus Metallblech ausgebildet ist.

16. Gliedermaßstab nach Anspruch 15, **dadurch gekennzeichnet,** daß das Metallblech eine Wandstärke von 0,1 bis 0,3 mm aufweist.

17. Gliedermaßstab nach einem der Ansprüche 1 bis 16, **dadurch gekennzeichnet,** daß jedes Holzglied (14) nur einen auf der der stirnseitigen Gliedkante (11) zugewandten Seite der zugehörigen Gelenkbohrung (16) angeordneten Rastkörper (30) aufweist.

18. Gliedermaßstab nach einem der Ansprüche 1 bis 16, **dadurch gekennzeichnet**, daß jedes Holzglied (14) zwei in gleichem Abstand von der zugehörigen Gelenkbohrung zu dieser spiegelbildlich angeordnete Rastkörper (30) aufweist.

19. Gliedermaßstab nach einem der Ansprüche 2 bis 18, **dadurch gekennzeichnet**, daß die Holzglieder einen die Rastvertiefungen (28) und die Laufspuren (38) überdeckenden Lacküberzug tragen.

## Claims

1. Folding ruler having elongated flat wooden sections (14), having clinch bolts which at a longitudinal distance corresponding at least to the section width from the front section edges engage through aligned articulation bores (16) disposed centrally in transverse direction and in so doing connect the wooden sections in pairs in an articulated manner to one another while simultaneously pressing their opposing broadside surfaces (26) against one another, and having in each case one detent mechanism which locks the wooden sections (14) in their parallel positions in pairs to one another and which comprises two detent recesses (28) disposed on either side of and at an equal distance from the clinch bolt (12) in the region of the one section end (10) and at least one complementary detent projection (30) in the region of the other section end (10′), which projection may snap under elastic prestressing into the detent recess, **characterized in that** the detent recesses (28) are formed at a longitudinal distance corresponding at least to half the section width from the articulation bores (16) inside the broadside surface (26) of the one wooden section (10, 14) directly into the ruler wood, that the detent projection is formed by at least one detent element (30) made of a harder material than the ruler wood, which is anchored at the distance of the detent recesses (28) from the articulation bore (16) inside the broadside surface of the other wooden section (10′, 14) directly in the ruler wood and projects with a crowned, smooth detent surface beyond the broadside surface (26) thereof, that the section parts which project longitudinally beyond the clinch bolts, upon swivelling of the wooden sections (14), are elastically bendable owing to the action of the detent element running up on the broadside surface (26) of the opposing wooden section (14), and that the detent element (30) is disposed with a press fit in a recess situated in the broadside surface (26) of the relevant wooden section (10′, 14) and takes the form of a prefabricated solid body or a prefabricated hollow body which is preferably open towards the broadside surface (26).

2. Folding ruler according to claim 1, **characterized by** in each case one arc-shaped running track (38), which extends in the broadside surface (26) between the detent recess (28) and the longitudinal side edges (36) of the one wooden section (10, 14), for the detent element (30) of the other wooden section (10′, 14).

3. Folding ruler according to claim 2, **characterized in that** the running track (38), upon swivelling of the wooden sections (14), is formed by the action of the detent element (30) which is pressed, with simultaneous elastic prestressing of the projecting section parts, against the broadside surface.

4. Folding ruler according to claim 2 or 3, **characterized in that** the wood in the region of the running track (38) has a material compression produced, upon swivelling of the wooden sections (14), under the action of the detent element (30) exerting contact pressure with simultaneous elastic prestressing of the projecting section parts.

5. Folding ruler according to one of claims 2 to 4, **characterized in that** each detent recess (28) is delimited by two edge regions (40, 42), which lie in pairs opposite one another and of which the one edge region pair (40) forms run-on surfaces opening into the adjacent running tracks (38) and the other edge region pair (42), which has a higher top edge than the first, forms a shaped seat for the detent element (30).

6. Folding ruler according to one of claims 1 to 5, **characterized in that** the detent recesses (28) and the detent element (30) are disposed in a transverse direction centrally on the broadside surface (26) of the relevant wooden section.

7. Folding ruler according to one of claims 1 to 6, **characterized in that** the detent recesses (28) and the detent element (30), when the wooden sections (14) are swivelled through 90° relative to one another, are disposed completely outside of the mutual overlap region of the wooden sections.

8. Folding ruler according to one of claims 1 to 6, **characterized in that** the detent recesses (28) and the detent element (30), when the wooden sections (14) are swivelled through an angle in the region of 60° to 120°, preferably 50° to 130°, relative to one another, are disposed completely outside of the mutual overlap region of the wooden sections.

9. Folding ruler according to one of claims 2 to 8, **characterized in that** the running tracks (38), when the wooden sections (14) are swivelled through 90° relative to one another, are disposed completely outside of the mutual overlap region of the wooden sections (14).

10. Folding ruler according to one of claims 1 to 9, **characterized in that** the detent recesses (28) and the detent element (30) have a mutually complementary circular contour.

11. Folding ruler according to one of claims 1 to 10, **characterized in that** the detent element (30) has the shape of a spherical cup.

12. Folding ruler according to one of claims 1 to 11, **characterized in that** the edge of the recess is pressed or upset against the detent element to form a form fit for the detent element.

13. Folding ruler according to one of claims 1 to 12, **characterized in that** the detent element (30) projects with an, in relation to the detent recess, slight oversize of preferably 0.1 to 0.2 mm beyond the relevant broadside surface (26).

14. Folding ruler according to one of claims 1 to 13, **characterized in that** the detent element (30) is made of a material belonging to the group of glass, ceramics, plastic, hardwood or metal.

15. Folding ruler according to one of claims 1 to 14, **characterized in that** the detent element takes the form of a punched and/or deep-drawn part made of sheet metal.

16. Folding ruler according to claim 15, **characterized in that** the sheet metal has a wall thickness of 0.1 to 0.3 mm.

17. Folding ruler according to one of claims 1 to 16, **characterized in that** each wooden section (14) has only one detent element (30) disposed on the side of the associated articulation bore (16) facing the front section edge (11).

18. Folding ruler according to one of claims 1 to 16, **characterized in that** each wooden section (14) has two detent elements (30) disposed at an equal distance from and mirror-symmetrically to the relevant articulation bore.

19. Folding ruler according to one of claims 2 to 18, **characterized in that** the wooden sections carry a varnish coating which covers the detent recesses (28) and the running tracks (38).

## Revendications

1. Mètre pliant avec des branches en bois plates allongées (14), comprenant des boulons rivés qui sont disposés à distance longitudinale des bords frontaux des branches laquelle correspond au moins à la largeur des branches et qui traversent des alésages d'articulation (16) centrés dans la direction transversale et alignés les uns avec les autres, en articulant par paires les branches en bois dont les surfaces (26) des côtés larges tournées les unes vers les autres sont appliquées l'une contre l'autre, et respectivement un mécanisme d'arrêt qui verrouille les branches en bois (14) par paires dans leurs positions parallèles et comporte deux creux d'arrêt (28) disposés, dans la région de l'une des extrémités (10), de part et d'autre à distance égale du boulon rivé (12), et, dans la région de l'autre extrémité (10′) des branches, au moins une bosse d'arrêt (30) complémentaire pouvant s'encliqueter sous précontrainte élastique dans lesdits creux d'arrêt, **caractérisé en ce** que les creux d'arrêt (28) sont directement conformés dans le bois du mètre pliant, à une distance longitudinale des alésages d'articulation (16) qui correspond au moins à la moitié de la largeur des branches, de préférence de manière centrée dans le sens transversal, dans la surface (26) des côtés larges de l'une des branches en bois (10, 14), que la bosse d'arrêt est constituée par au moins un corps d'arrêt (30) réalisé à partir d'un matériau plus dur, qui est ancré directement dans le bois du mètre pliant, à la distance entre les creux d'arrêt (28) et l'alésage d'articulation (16), dans la surface du côté large de l'autre branche en bois (10′, 14), et dépasse avec une surface d'arrêt lisse bombée de la surface (26) du côté large de ladite branche en bois, que les parties de branches dépassant du boulon rivé dans le sens longitudinal peuvent, lors du pivotement des branches en bois (14), être pliées élastiquement par l'action du corps d'arrêt montant sur la surface (26) du côté large de la branche en bois (14) opposée, et que le corps d'arrêt (30) est disposé avec ajustage serré dans un évidement ménagé dans la surface (26) de l'un des côtés larges de la branche en bois (10′, 14) considérée, et réalisé sous la forme d'un corps massif préfabriqué ou d'un corps creux préfabriqué, de préférence ouvert en direction de la surface (26) du côté large.

2. Mètre pliant selon la revendication 1, caractérisé en ce qu'il présente dans la surface (26) du côté large, entre le creux d'arrêt (28) et les bords (36) des grands côtés de l'une des branches en bois (10, 14), une trace de déplacement (38) en arc de cercle pour le corps d'arrêt (30) de l'autre branche en bois (10′, 14).

3. Mètre pliant selon la revendication 2, caractérisé en ce que, lors du pivotement des branches en bois (14), la trace de déplacement (28) est formée par le corps d'arrêt (30) appliqué contre la surface du côté large sous l'effet de la précontrainte élastique des parties de branche en saillie.

4. Mètre pliant selon l'une des revendications 2 ou 3, caractérisé en ce que le bois présente, dans la région de la trace de déplacement (38), une compression de matière produite lors du pivotement des branches en bois (14) par l'application du corps d'arrêt (30) sous l'effet de la précontrainte élastique des parties de branche en saillie.

5. Mètre pliant selon l'une des revendications 2 à 4, caractérisé en ce que chaque creux d'arrêt (28) est délimité par deux zones latérales (40, 42) diamétralement opposées par paires dont l'une des paires de zones latérales (40) forme des surfaces d'arrêt débouchant dans les traces de déplacement (38) voisines et dont l'autre paire de zones latérales (42) présentant un bord supérieur plus haut constitue un siège à engagement positif pour le corps d'arrêt (30).

6. Mètre pliant selon l'une des revendications 1 à 5, caractérisé en ce que les creux d'arrêt (28) et le corps d'arrêt (30) sont centrés dans le sens transversal sur la surface du côté large (26) de la branche en bois (10, 14) associée.

7. Mètre pliant selon l'une des revendications 1 à 6, caractérisé en ce que, lorsque les branches en bois (14) sont pivotées les unes par rapport aux autres de 90°, les creux d'arrêt (28) et le corps d'arrêt (30) se situent entièrement en dehors de la zone de recouvrement mutuel des branches en bois.

8. Mètre pliant selon l'une des revendications 1 à 6, caractérisé en ce que, lorsque les branches en bois (14) sont pivotées les unes par rapport aux autres d'un angle compris entre 60° et 120°, de préférence entre 50° et 130°, les creux d'arrêt (28) et le corps d'arrêt (30) se situent entièrement en dehors de la zone de recouvrement mutuel des branches en bois.

9. Mètre pliant selon l'une des revendications 2 à 8, caractérisé en ce que, lorsque les branches en bois (14) sont pivotées les unes par rapport aux autres de 90°, les traces de déplacement (38) se situent entièrement en dehors de la zone de recouvrement mutuel des branches en bois (14).

10. Mètre pliant selon l'une des revendications 1 à 9, caractérisé en ce que les creux d'arrêt (28) et le corps d'arrêt (30) présentent des contours circulaires complémentaires.

11. Mètre pliant selon l'une des revendications 1 à 10, caractérisé en ce que le corps d'arrêt (30) présente la forme d'une calotte sphérique.

12. Mètre pliant selon l'une des revendications 1 à 11, caractérisé en ce que le bord latéral de l'évidement est appliqué ou refoulé contre le corps d'arrêt, avec formation d'un engagement positif pour le corps d'arrêt.

13. Mètre pliant selon l'une des revendications 1 à 12, caractérisé en ce que le corps d'arrêt (30) dépasse avec une légère surmesure par rapport au creux d'arrêt, de préférence de 0,1 à 0,2 mm, de la surface du côté large (26) correspondant.

14. Mètre pliant selon l'une des revendications 1 à 13, caractérisé en ce que le corps d'arrêt est constitué d'un matériau appartenant au groupe verre, céramique, matière plastique, bois dur ou métal.

15. Mètre pliant selon l'une des revendications 1 à 14, caractérisé en ce que le corps d'arrêt est constitué par une pièce de découpage et/ou d'emboutissage profond en tôle métallique.

16. Mètre pliant selon la revendication 15, caractérisé en ce que la tôle métallique présente une épaisseur de paroi de 0,1 à 0,3 mm.

17. Mètre pliant selon l'une des revendications 1 à 16, caractérisé en ce que chaque branche en bois (14) ne comporte qu'un seul corps d'arrêt (30) disposé du côté de l'alésage d'articulation (16) associé tourné vers le bord frontal (11) de la branche.

18. Mètre pliant selon l'une des revendications 1 à 16, caractérisé en ce que chaque branche en bois (14) comporte deux corps d'arrêt (30) disposés en image de miroir à des distances égales par rapport à l'alésage d'articulation associé.

19. Mètre pliant selon l'une des revendications 2 à 18, caractérisé en ce que les branches en bois portent un revêtement de vernis qui recouvre les creux d'arrêt (28) et les traces de déplacement (38).
